# EUROPÄISCHE PATENTSCHRIFT

(11) **EP 3 281 853 B1**
(45) Veröffentlichungstag und Bekanntmachung des Hinweises auf die Patenterteilung: **27.11.2019**
(21) Anmeldenummer: 17001376.7
(22) Anmeldetag: 10.08.2017
(51) Int. Cl.: B62J 7/08, B62J 9/00, B62J 11/00, B62J 17/04

(54) **BEHÄLTER-ADAPTER FÜR FAHRRAD-GEPÄCKTRÄGER**
CONTAINER ADAPTER FOR BICYCLE LUGGAGE CARRIER
ADAPTATEUR DE RÉCIPIENT POUR PORTE-BAGAGE DE BICYCLETTE

(30) Priorität: 13.08.2016 DE 102016010025
(43) Veröffentlichungstag der Anmeldung: 14.02.2018
(73) Patentinhaber: RIXEN & KAUL GmbH, 42699 Solingen (DE)
(72) Erfinder: Flammann, Norbert, 42653 Solingen (DE); Rixen, Edgar, 42699 Solingen (DE)

(56) Entgegenhaltungen:
- DE-A1-102006 055 463
- DE-A1-102011 009 447
- DE-U1-202014 103 375

## Beschreibung

Die Erfindung betrifft einen Behälter-Adapter für Fahrrad-Gepäckträger mit mindestens einer den Gepäckträger brückenden, ein- oder mehrteiligen Traverse und mit mindestens zwei Riegeln. Die Behälter werden vorzugsweise auf die Oberseite des hinteren Gepäckträgers des Fahrrades aufgesetzt. Die Gepäckträger sind handelsüblicher Art mit je einer Reling auf beiden Längsseiten.

Aus der gattungsbildenden DE 10 2011 009 447 A1 ist ein Gepäckbehältnis mit einem Adapter zur Befestigung auf einem Fahrrad-Gepäckträger bekannt. Häufiges Abnehmen und Aufsetzen des Gepäckbehältnisses sind bei dieser Befestigungslösung sehr komfortabel. Gepäckträger und Adapter sind speziell aufeinander abgestimmt. Eine universelle Verwendung des Adapters erscheint ausgeschlossen.

Aus der DE 10 2006 055 463 A1 ist eine Befestigungslösung für eine Gepäckträgertasche zur seitlichen Anbringung an einem Fahrrad-Gepäckträger bekannt. Die Gepäckträgertasche ist an die Reling des Gepäckträgers oder an eine dazu parallele Stange außen am Gepäckträger angehängt. Die Gepäckträgertasche kann bei Kurvenfahrt abschwingen. Das lässt sich durch geeignete, aber an dieser Stelle nicht gezeigte Fanghaken unterbinden. Ein auf den Gepäckträger aufgesetztes Gepäckbehältnis muss an zwei Stellen in einer Querebene zur Fahrradebene fixiert werden. Die dort gezeigte Gepäcktasche hängt an zwei Haken. Riegel verschließen im verriegelten Zustand die Hakenöffnungen und sind in Sperrrichtung federnd abgestützt. Diese Lösung ist für aufgesetztes Gepäck ungeeignet. Es gibt bei seitlich angehängten Gepäckbehältnissen keine den Gepäckträger überbrückenden Traversen. Eine andersartige Lösung für einen andersartigen Zweck (Transport von Reisegepäck).

Der Erfindung liegt die Aufgabe zugrunde, einen einfachen Adapter der eingangs genannten Art zu schaffen, der eine ausreichende Befestigung gewährleistet.

Die Lösung dieser Aufgabe ist im Anspruch 1 wiedergegeben. Die Traversen sind dabei quer zur Fahrradebene ausgerichtet oder sie sind durch eine einstückige Platte mit zwei runter gebogenen, quer zur Fahrtrichtung sich erstreckenden Abkantungen, die eine Kopfplatte und eine Fußplatte bilden, ersetzt. Kopf-und Fußplatte, sind dann die beiden Traversen, und sie sind einstückig. Die runtergebogenen Randstreifen der Adapterplatte oder die an deren Stelle auf aufgesetzten Traversen dienen der Riegel-Befestigung, wobei die Riegel stets zwischen den Stegen angeordnet sind.

Diese Riegel haben Hakenfüße, die im verriegelnden Zustand, von oben kommend, je eine der Längstraversen des Gepäckträgers untergreifen.

Funktional ist zwischen den Riegeln und den den Gepäckträger brückenden Traversen eine Federung für die Riegel vorgesehen. Diese Federung gestattet den Riegeln eine elastische Beweglichkeit zur Verbindung des Adapters mit unterschiedlichen Abmessungen insbesondere mit unterschiedlich breiten Gepäckträgern. Die Elemente der Federung sind oberhalb der Gepäckträgerpritsche vorgesehen und liegen damit im Umfangsvolumen des Adapters, das ist unterhalb des Behälters.

Bevorzugt sind mindestens zwei den Gepäckträger brückende Traversen vorgesehen. Aus Kostengründen und aus Gewichtsgründen wird diese Lösung favorisiert.

In einer besonders vorteilhaft ausgestalteten Weiterbildung der Erfindung wird vorgeschlagen, dass die Traversen an ihrer dem Behälter zugewandten Seite nach oben offene Schlitze aufweisen, die Teil der Mittel zur Voreinstellung der Riegel sind. Durch diese Maßnahme wird auch eine Anpassung an sehr große oder sehr kleine, schlanke Gepäckträger möglich, ohne die Sicherheit der Verbindung zwischen Adapter und Gepäckträger zu beeinträchtigen.

Eine Weiterbildung der Erfindung ist dadurch gekennzeichnet, dass als Mittel zur Voreinstellung der Lage eines betroffenen Riegels mindestens einer von zwei voneinander beabstandeten Abschnitten einer somit unvollständigen Traverse orthogonal zur Fahrradebene gegenüber dem Adapter verschiebbar und festlegbar ist. Aufgrund einer ausreichenden Versteifung der Bodenplatte des Behälters oder des Adapters genügt es, in den Eckbereichen der Adapter-Befestigung Endstücke der ursprünglichen Traversen vorzusehen, die zudem noch eine Verschiebbarkeit dieser Endstücke in Richtung Fahrradebene ermöglichen und somit eine vereinfachte Voreinstellung des Adapters erlauben. Die Endstücke umfassen auch die Aufnahmen für die Federstäbe.

Die in weiterer Ausgestaltung vorgesehenen einzelnen Zahnlücken dienen der Aufnahme der oft vorstehenden Bügel der Federklappe am Gepäckträger.

In einer bevorzugten Weiterbildung der Erfindung wird vorgeschlagen, dass mindestens eine Aussteifung (29) zwischen den Traversen (13,14) vorgesehen ist. Diese Maßnahme dient der Verbesserung von Festigkeit und Steifigkeit des Systems.

Die Federstäbe sind ca. 15 cm lang und 4 mm dick im Durchmesser und frei tragend zwischen den Traversen montiert. Es sind genau zwei Federstäbe vorgesehen, die bevorzugt in ihrem mittleren Längenbereich je einen Riegel tragen. Die Federstäbe bilden eine gefederte Drehachse für die Riegel. Die Riegel sind längsverschiebbar auf den Federstäben angeordnet.

In weiterer Ausgestaltung der Erfindung ist vorgesehen, dass die Stäbe lose in den Adapter eingelegt sind. Damit wird erreicht, dass die Federstäbe als Biegefeder genutzt werden können. Dadurch wird eine Montagevereinfachung erzielt.

In bevorzugter Ausgestaltung der Erfindung ist vorgesehen, dass die Außenseite der den Federstab einschließenden Gelenkhülse des Riegels mindestens einen Noppen oder mindestens einen Längsgrat aufweisen, die es ermöglichen, eine Verrastung und Beruhigung des Riegels in der entriegelten Stellung zu erzielen.
Im entriegelten Zustand drückt der Federstab den Riegel gegen die Bodenplatte des Adapters. Um eine Ruhestellung des Riegels insbesondere bei abgenommenem Korb zu sichern, sind auf dem Riegel im möglichen Kontaktbereich mit der Bodenplatte des Adapters die Noppen oder Längsgrate vorgesehen, die die Verrastung des/der Riegel(s) bewirken.

Zur seitlichen Führung des Adapters an dem Gepäckträger und zur Verhinderung des Abrutschens des Behälters mit dem Adapter ist nach einem ergänzenden Merkmal der Erfindung vorgesehen, dass in einem Endbereich mindestens einer Traverse an deren Unterseite ein U-förmiger, nach unten offener Einschnitt für die Längsstrebe des Gepäckträgers ist, deren Weite die größte Querschnittsabmessung einer Längsstrebe des Gepäckträgers übersteigt. Die U-Form des Einschnittes in einer oder beiden Traversen ist so gewählt, dass bei Inbetriebnahme der gefederten Verriegelung der betrachtete Längsholm sicher erfasst wird. Der U-förmige Abschnitt ist unmittelbar in dem Adapter oder seinen Traversen ausgebildet.

Nach einer ergänzenden Weiterbildung der Erfindung ist vorgesehen, dass an den Traversen Vorsprünge sind, die in das Gefache des Gepäckträgers hineinragen. Es kann eine Mehrzahl von Vorsprüngen vorgesehen sein, von denen der Teil, der im konkreten Fall stört, wegzuschneiden sein wird. Bei Nutzung der vorstehend beschriebenen U-förmigen Einschnitte ragt eine an einer Traverse ausgebildete Wange des U-förmigen Einschnittes in das Gefache des Gepäckträgers hinein und verhindert so ein Abrutschen des Behälters mit dem Adapter nach hinten.

Ein ergänzendes Merkmal zu der Erfindung wird darin gesehen, dass die Riegelachse oberhalb der Gepäckträgerpritsche angeordnet ist. Dies mit dem Ziel räumliche Konflikte mit Akkus von Pedelecs zu vermeiden, die oft unterhalb der Gepäckträgerpritsche angeordnet sind.

Es wird als Bereicherung der Erfindung angesehen, wenn an einem oder an mehreren Traversenabschnitten sowohl der oder die in das Gefache des Gepäckträgers eingreifende(n) Vorsprung/Vorsprünge ausgebildet sind als auch bei allen Traversenabschnitten Aufnahmen für die Riegelachse vorgesehen sind.

Die Erfindung wird im Einzelnen anhand der Zeichnung erläutert, dabei zeigen:
- Fig. 1:: Eine Seitenansicht eines Gepäckträgers mit Adapter und Behälter;
- Fig. 2:: eine perspektivische Unteransicht unter einen Adapter mit aufmontiertem Behälter;
- Fig. 3:: eine perspektivische Unteransicht auf einen Adapter mit geteilten Traversen;

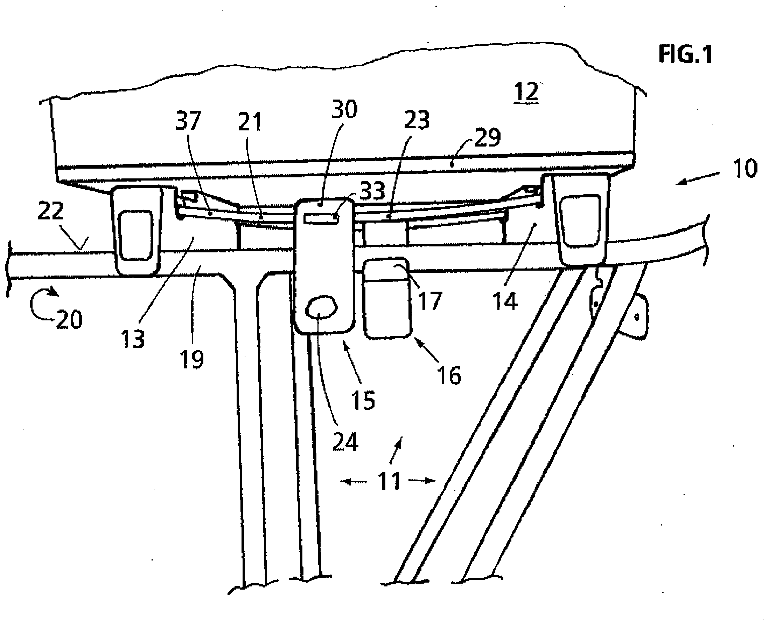

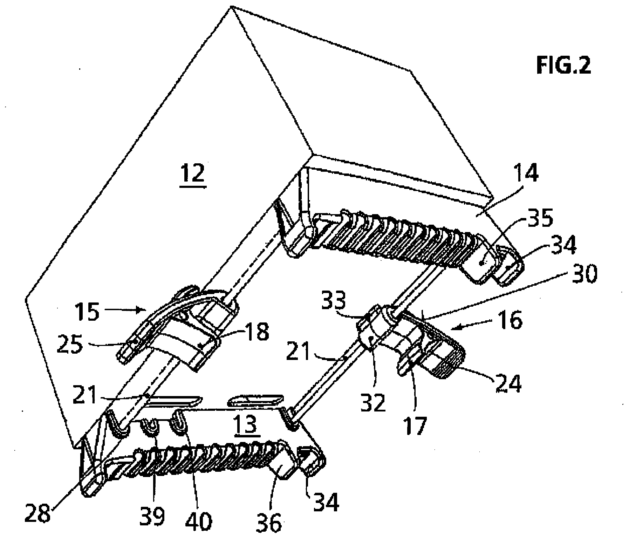

Fig.1 zeigt in Verbindung mit Fig.2 einen Behälter-Adapter 10 für Fahrrad-Gepäckträger 11 mit zwei den Gepäckträger 11 brückenden Traversen 13, 14, die durch eine Platte als Aussteifung 29 miteinander verbunden sind, weiter sind zwei Riegel 15, 16 mit Riegelhaken 17, 18 am Adapter 10 für die Verbindung einer der beiden äußersten Längsstreben 19, 20 des Gepäckträgers 11 mit dem Adapter 10. Dabei sind die Riegelhaken 17, 18 in Richtung der Verspannung von Adapter 10 und Gepäckträger 11 gefedert, wobei die Federn 21 oberhalb der Gepäckträgerpritsche 22 angeordnet sind. Das vermeidet Konflikte mit bei Pedelecs oft auf bzw. unter dem Gepäckträger angeordneten Akkus. Die Riegel 15, 16 sind in ihrer räumlichen Lage durch Umhängen der Feder 21 in unterschiedliche Schlitze 28, 39, 40 (Fig.2) voreinstellbar. Die Riegelhaken 17, 18 untergreifen, im verriegelnden Zustand, von oben kommend, je eine Längsstrebe 19, 20 des Gepäckträgers 11, wobei die Riegel 15, 16 an mindestens einer gegenständlichen Gelenkachse 23 drehbar gelagert sind und sie weisen je eine Handhabe 24, 25 zur Betätigung dieser Riegel 15, 16 auf. Die Unterseite jeder Traverse 13, 14 ist zahnstangenartig ausgebildet. In die Zahnlücken können vorstehende Drahtstücke von Federklappen des Gepäckträgers 11 eintauchen.

Die Federn 21 sind als runde Federstäbe ausgebildet, die gleichzeitig als gegenständliche Gelenkachse 23 für die Riegel 15, 16 und als Führung zum Verschieben der Riegel 15, 16 ausgebildet sind. Die Stäbe erstrecken sich parallel zu den Längsstreben 19, 20. Sie werden bei der Montage des Adapters 10 lose eingelegt und in der Folge zugebaut, so dass sie nicht herausfallen können.

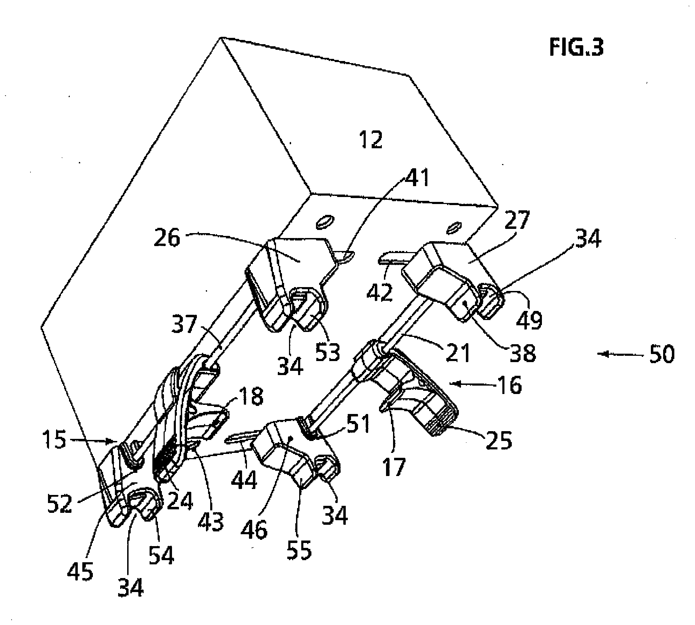

Fig.3 zeigt eine alternative Ausführungsform 50 des Behälter-Adapters 10 wobei als Mittel zur Voreinstellung der Lage eines betroffenen Riegels 15, 16 voneinander getrennte, äußere Abschnitte 26, 27 einer unvollständigen Traverse 14 orthogonal zur Fahrradebene gegenüber dem Adapter 50 in Langlöchern 41, 42, 43, 44 verschiebbar und mit nicht gezeigten Schrauben festlegbar ist. Gleiches gilt für die Traverse 13 mit den äußeren Abschnitten 47, 48.

In Fig.2 ist weiter am Beispiel des Riegels 16 gezeigt, dass die Außenseite 30 der die als Stab ausgebildete Feder 21 einschließenden Gelenkhülse 32 des Riegels 16 einen Längsgrat 33 aufweist, der es ermöglicht, eine Verrastung und Beruhigung der Riegel 15, 16 in der entriegelten Stellung zu erzielen. Die als Stäbe ausgebildeten Federn 21 sind in jede Richtung in einer Querebene rechtwinklig zu ihrer Längserstreckung als Feder nutzbar. Sie sind kreisrund und daher in jeder Querrichtung mit gleichem Aufwand verformbar. Die Federn 21 sind aus Metall, vorzugsweise aus Stahl.

An der Unterseite einer jeden Traverse 13,14 sind mehrere U-förmige Einschnitte 34 für die Längsstreben 19, 20 des Gepäckträgers 11 vorgesehen, deren Weite die größte Querschnittsabmessung einer Längsstrebe 19, 20 des Gepäckträgers 11 übersteigt. Die Einschnitte 34 werden von zwei Wangen 38, 49 begrenzt, wie am Beispiel des U-förmigen Einschnitts 34 des Traversen-Abschnitts 27 in Fig.3 gezeigt, wobei die Wange 38 in das Gefache des Gepäckträgers 11 eintaucht und so ein Abrutschen des Behälters 12 mitsamt dem Adapter 50 verhindert.

Bei der Erfindung liegt die Riegelachse 37 stets oberhalb der Gepäckträgerpritsche 22.

Wie in Fig. 3 gezeigt, sind bei den Traversen an deren äußeren Abschnitten 26, 27, 45, 46 der/die in das Gefache des Gepäckträgers 11 eingreifende(n) Vorsprung/Vorsprünge 38, 53, 54, 55 ausgebildet und bei allen äußeren Abschnitten 26, 27, 45, 46 der Traversen Aufnahmen 51, 52 für die Riegelachse 37.

## Patentansprüche

1. Behälter-Adapter (10, 50) für Fahrrad-Gepäckträger (11) mit einer Gepäckträgerpritsche (22)
a) mit mindestens einer ein- oder mehrteiligen Traverse (13, 14), die den Gepäckträger (11) brücken kann;
**dadurch gekennzeichnet, dass**
b) mindestens zwei Riegel (15, 16) mit Riegelhaken (17, 18) am Adapter (10, 50) vorgesehen sind und dass nach der Montage des Behälter-Adapters auf einem Fahrrad-Gepäckträger
b1) die Riegelhaken (17, 18) eine Verbindung einer von zwei äußersten Längsstreben (19, 20) des Gepäckträgers (11) mit dem Adapter (10, 50) darstellen;
b1α) dass die Riegelhaken (17, 18) in Richtung der Verspannung von Adapter (10, 50) und Gepäckträger (11) gefedert sind,
b2) dass mindestens eine der Federn (21) oberhalb einer Gepäckträgerpritsche (22) angeordnet ist;
c) dass die Riegel (15, 16) in ihrer räumlichen Lage voreinstellbar sind;
d) dass die Riegelhaken (17, 18) im verriegelnden Zustand, von oben kommend, je eine Längsstrebe (19, 20) eines Gepäckträgers (11) untergreifen, und
e) dass die Riegel (15, 16) an mindestens einer gegenständlichen Gelenkachse (23) drehbar gelagert sind und je eine Handhabe (24, 25) zur Betätigung dieser Riegel (15, 16) aufweisen.

2. Behälter-Adapter (10, 50) für Fahrrad-Gepäckträger (11) nach Anspruch 1 **gekennzeichnet durch** mindestens zwei den Gepäckträger (11) brückende Traversen (13, 14).

3. Behälter-Adapter (10) für Fahrrad-Gepäckträger (11) nach Anspruch 2, **dadurch gekennzeichnet, dass** die Traversen (13, 14) an ihrer dem Behälter (12) zugewandten Seite vertikal ausgerichtete nach oben offene Schlitze (28, 39, 40) aufweisen, die Teil der Mittel zur Voreinstellung der Riegel (15, 16) sind

4. Behälter-Adapter (50) für Fahrrad-Gepäckträger (11) nach Anspruch 3, **dadurch gekennzeichnet, dass** als Mittel zur Voreinstellung der Lage eines betrachteten Riegels (15, 16) mindestens einer von zwei voneinander getrennten, äußeren Abschnitten (26, 27, 45, 46) einer somit unvollständigen Traverse orthogonal zur Fahrradebene gegenüber dem Adapter (50) verschiebbar und festlegbar ist.

5. Behälter-Adapter (10) für Fahrrad-Gepäckträger (11) nach Anspruch 2, **dadurch gekennzeichnet, dass** die Unterseite jeder Traverse (13, 14) zahnstangenartig ausgebildet ist.

6. Behälter-Adapter (10) für Fahrrad-Gepäckträger (11) nach einem der vorangehenden Ansprüche, **dadurch gekennzeichnet, dass** mindestens eine Aussteifung (29) zwischen den Traversen (13,14) vorgesehen ist.

7. Behälter-Adapter (10) für Fahrrad-Gepäckträger (11) nach einem der vorangegangenen Ansprüche, **dadurch gekennzeichnet, dass** die Federn (21) für die Riegel (15, 16) als Stäbe ausgebildet sind, die sich parallel zu den Längsstreben (19, 20) erstrecken und die Riegel (15, 16) tragen.

8. Behälter-Adapter (10) für Fahrrad-Gepäckträger (11) nach Anspruch 7, **dadurch gekennzeichnet, dass** die Stäbe lose in den Adapter (10) eingelegt sind.

9. Behälter-Adapter (10) für Fahrrad-Gepäckträger (11) nach einem der vorangegangenen Ansprüche 7 oder 8, **dadurch gekennzeichnet, dass** die Außenseite (30) der die Stabform der Feder (21) einschließenden Gelenkhülse (32) des Riegels 16) mindestens einen Noppen oder mindestens einen Längsgrat (33) aufweisen, die es ermöglichen, eine Verrastung und Beruhigung des Riegels (15, 16) in der entriegelten Stellung zu erzielen.

10. Behälter-Adapter (10) für Fahrrad-Gepäckträger (11) nach Anspruch 2, **dadurch gekennzeichnet, dass** in einem Endbereich mindestens einer Traverse (13,14) an deren Unterseite ein U-förmiger Einschnitt (34) für die Längsstreben (19, 20) des Gepäckträgers (11) ist, dessen Weite die größte Querschnittsabmessung einer Längsstrebe (19, 20) des Gepäckträgers (11) übersteigt.

11. Behälter-Adapter (10, 50) für Fahrrad-Gepäckträger (11) nach Anspruch 10, **dadurch gekennzeichnet, dass** an den Traversen (13, 14) Vorsprünge (35, 36, 38) sind, die in das Gefache des Gepäckträgers (11) hineinragen.

12. Behälter-Adapter (10, 50) für Fahrrad-Gepäckträger (11) nach Anspruch 1, **dadurch gekennzeichnet, dass** die Riegelachse (37) oberhalb der Gepäckträgerpritsche (22) angeordnet ist.

13. Behälter-Adapter (50) für Fahrrad-Gepäckträger (11) nach Anspruch 4, **dadurch gekennzeichnet, dass** an einem oder an mehreren äußeren Abschnitten (26,27, 45, 46) der Traversen sowohl der oder die in das Gefache des Gepäckträgers (11) eingreifende(n) Vorsprung/Vorsprünge (38, 53, 54, 55) ausgebildet sind als auch bei allen äußeren Abschnitten (26, 27, 45, 46) der Traversen Aufnahmen (51, 52) für die Riegelachse (37) vorgesehen sind.

## Claims

1. A container adapter (10, 50) for a bicycle luggage carrier (11) comprising a luggage carrier platform (22)
a) comprising at least one one-piece or multi-piece traverse (13, 14) which can span the luggage carrier (11);
**characterized in that**
b) at least two latches (15, 16) comprising locking hooks (17, 18) are provided on the adapter (10, 50) and that after the installation of the container adapter on a bicycle luggage carrier
b1) the locking hooks (17, 18) form a connection of one of two outmost longitudinal bracings (19, 20) of the luggage carrier (11) with the adapter (10, 50);
b1a) that the locking hooks (17, 18) are tongued in the direction of the clamping of the adapter (10, 50) and the luggage carrier (11)
b2) that at least one of the springs (21) is arranged above a luggage carrier platform (22);
c) that the latches (15, 16) can be pre-adjusted with respect to the spatial location thereof;
d) that in the locked state, the locking hooks, coming from above, reach under respectively one longitudinal bracing (19, 20) of a luggage carrier (11) and
e) that the latches (15, 16) are mounted on at least one objective joint axis (23) so as to be rotatable and comprise each a handle (24, 25) for actuating these latches (15, 16).

2. A container adapter (10, 50) for a bicycle luggage carrier (11) according to claim 1, **characterized by** at least two traverses (13, 14) that span the luggage carrier (11).

3. A container adapter (10) for a bicycle luggage carrier (11) according to claim 2, **characterized in that** the traverses (13, 14), on their faces facing the container (12), comprise vertically oriented slots (28, 39, 40) that are open upwards and that are parts of the means for pre-adjusting the latches (15, 16).

4. A container adapter (50) for a bicycle luggage carrier (11) according to claim 3, **characterized in that** as means for pre-adjusting the position of a considered latch (15, 16) at least one of two outer sections (26, 27, 45, 46) that are separated from each other of a thus incomplete traverse can be displaced and fixed orthogonally to the bicycle plane with respect to the adapter (50).

5. A container adapter (10) for a bicycle luggage carrier (11) according to claim 2, **characterized in that** the underside of each traverse (13, 14) is configured like a toothed rack.

6. A container adapter (10) for a bicycle luggage carrier (11) according to one of the preceding claims, **characterized in that** at least one stiffening reinforcement (29) is provided between the traverses (13, 14).

7. A container adapter (10) for a bicycle luggage carrier (11) according to one of the preceding claims, **characterized in that** the springs (21) of the latches (15, 16) are configured as bars which extend parallel to the longitudinal bracings (19, 20) and carry the latches (15, 16).

8. A container adapter (10) for a bicycle luggage carrier (11) according to claim 7, **characterized in that** the bars are loosely inserted into the adapter (10).

9. A container adapter (10) for a bicycle luggage carrier (11) according to one of the preceding claims 7 or 8, **characterized in that** the outer face (30) of the joint sleeve (32) of the latch (15, 16), which joint sleeve is enclosing the bar shape of the spring (21), comprises at least one nub or at least one longitudinal ridge (33) which enables to obtain a locking and an easing of the latch (15, 16) in the unlocked position.

10. A container adapter (10) for a bicycle luggage carrier (11) according to claim 2, **characterized in that** in an end area of at least one of the traverses (13, 14), at the underside thereof, a U-shaped cut (34) is provided for the longitudinal bracings (19, 20) of the luggage carrier (11), the width of the cut (34) exceeding the maximum cross sectional dimension of a longitudinal bracing (19, 20) of the luggage carrier (11).

11. A container adapter (10, 50) for a bicycle luggage carrier (11) according to claim 10, **characterized in that** protrusions (35, 36, 38) are provided on the traverses (13, 14), which protrusions project into the compartments of the luggage carrier (11).

12. A container adapter (10, 50) for a bicycle luggage carrier (11) according to claim 1, **characterized in that** the latch axis (37) is arranged above the luggage carrier platform (22).

13. A container adapter (50) for a bicycle luggage carrier (11) according to claim 4, **characterized in that** the protrusion(s) (38, 53, 54, 55), which engage(s) into the compartments of the luggage carrier (11), is/are formed on one or more outer sections (26, 27, 45, 46) of the traverse and recesses (51, 52) for the latch axis (37) are provided on all outer sections (26, 27, 45, 46) of the traverse.

## Revendications

1. Adaptateur de récipient (10, 50) pour porte-bagages de bicyclette (11) comprenant un plateau de porte-bagages (22)
a) comprenant au moins une traverse (13, 14) réalisée en une ou plusieurs parties, laquelle traverse peut enjamber le porte-bagages (11) ;
**caractérisé en ce que**
b) au moins deux verrous (15, 16) comprenant des crochets de verrouillage (17, 18) sont prévus sur l'adaptateur (10, 50) et qu'après le montage de l'adaptateur de récipient sur un porte-bagages de bicyclette
b1) les crochets de verrouillage (17, 18) forment une liaison entre l'une de deux entretoises longitudinales (19, 20) les plus extérieures du porte-bagages (11) et l'adaptateur (10, 50) ;
b1α) que les crochets de verrouillage (17, 18) sont montés élastiquement dans la direction du serrage de l'adaptateur (10, 50) et du porte-bagages (11),
b2) que l'au moins un des ressorts (21) est disposé au-dessus d'un plateau de porte-bagages (22) ;
c) que les verrous (15, 16) peuvent être préfixés dans leur position spatiale ;
d) qu'à l'état verrouillé, les crochets de verrouillage venant du haut passent chacun pas dessous d'une entretoise longitudinale (19, 20) d'un porte-bagages (11), et
e) que les verrous (15, 16) sont logés de manière rotative sur au moins un axe d'articulation concret (23) et ils comprennent chacun une poignée pour actionner ces verrous (15, 16).

2. Adaptateur de récipient (10, 50) pour porte-bagages de bicyclette (11) selon la revendication 1, **caractérisé par** au moins deux traverses (13, 14), qui enjambent le porte-bagages (11).

3. Adaptateur de récipient (10) pour porte-bagages de bicyclette (11) selon la revendication 2, **caractérisé en ce que** les traverses (13, 14), sur leurs surfaces faisant face au récipient (12), comprennent des fentes (28, 39, 40) orientées verticalement et ouvertes vers le haut, qui font partie des moyens pour pré-ajuster les verrous (15, 16).

4. Adaptateur de récipient (50) pour porte-bagages de bicyclette (11) selon la revendication 3, **caractérisé en ce que** comme des moyens pour pré-ajuster la position d'un verrou considéré (15, 16) au moins une de deux sections extérieures (26, 27, 45, 46) séparées l'une de l'autre d'une traverse ainsi incomplète peut être déplacée et fixée de manière orthogonale au plan de la bicyclette par rapport à l'adaptateur (50).

5. Adaptateur de récipient (10) pour porte-bagages de bicyclette (11) selon la revendication 2, **caractérisé en ce que** la face inférieure de chaque traverse (13, 14) est configurée sous forme d'une crémaillère.

6. Adaptateur de récipient (10) pour porte-bagages de bicyclette (11) selon l'une des revendications précédentes, **caractérisé en ce qu'**au moins un renfort (29) est prévu entre les traverses (13, 14).

7. Adaptateur de récipient (10) pour porte-bagages de bicyclette (11) selon l'une des revendications précédentes, **caractérisé en ce que** les ressorts (21) des verrous (15, 16) sont configurés comme des barres, qui s'étendent parallèlement aux entretoises longitudinales (19, 20) et qui portent les verrous (15, 16).

8. Adaptateur de récipient (10) pour porte-bagages de bicyclette (11) selon la revendication 7, **caractérisé en ce que** les barres sont insérées de façon amovible dans l'adaptateur (10).

9. Adaptateur de récipient (10) pour porte-bagages de bicyclette (11) selon l'une des revendications précédentes 7 ou 8, **caractérisé en ce que** la face extérieure (30) de la douille d'articulation (32) du verrou (15, 16), laquelle douille d'articulation enferme la forme de barre du ressort (21), comprend au moins un bouton ou au moins une arête longitudinale (33), qui permet d'obtenir un encliquetage et un apaisement du verrou (15, 16) dans la position déverrouillée.

10. Adaptateur de récipient (10) pour porte-bagages de bicyclette (11) selon la revendication 2, **caractérisé en ce que** dans une zone d'extrémité d'au moins une traverse (13, 14), sur la face inférieure de celle-ci, il y a une entaille en forme de U (34) pour les entretoises longitudinales (19, 20) du porte-bagages (11), la largeur de l'entaille (34) excédant la dimension maximale en section transversale d'une entretoise longitudinale (19, 20) du porte-bagages (11).

11. Adaptateur de récipient (10, 50) pour porte-bagages de bicyclette (11) selon la revendication 10, **caractérisé en ce que** des saillies (35, 36, 38) sont prévues sur les traverses (13, 14), lesquelles saillies pénètrent dans les compartiments du porte-bagages (11).

12. Adaptateur de récipient (10, 50) pour porte-bagages de bicyclette (11) selon la revendication 1, **caractérisé en ce que** l'axe de verrou (37) est disposé au-dessus du panneau de porte-bagages (22).

13. Adaptateur de récipient (50) pour porte-bagages de bicyclette (11) selon la revendication 4, **caractérisé en ce que** la/les saillie(s) (38, 53, 54, 55), qui s'engagent dans les compartiments du porte-bagages (11), est/sont formée(s) sur une ou plusieurs sections extérieures (26, 27, 45, 46) de la traverse et des évidements (51, 52) destinés à l'axe de verrou (37) sont prévus sur toutes les sections extérieures (26, 27, 45, 46) de la traverse.
